# EUROPEAN PATENT APPLICATION

(11) **EP 1 454 730 A1**
(43) Date of publication of application: **08.09.2004**
(21) Application number: 04004224.4
(22) Date of filing: 25.02.2004
(51) Int. Cl.: B29C 45/16

(54) **Method for the production of plastic parts with a translucent layer**

(30) Priority: 03.03.2003 DE 10309230
(71) Applicant: TRW Automotive Electronics & Components GmbH & Co. KG, 78315 Radolfzell (DE)
(72) Inventor: Ebner, Thomas, 78315 Radolfzell (DE)
(74) Representative: Degwert, Hartmut, Dipl.-Phys.

(57) **Abstract**

In order to produce a plastic part (5) that has an opaque body (1) and a front surface with at least one translucent area delineated from an opaque area, in a first step, a blank (1) with a recessed volume (2) is formed by means of injection molding using an opaque plastic component. The recessed volume (2) extending from an opening in a face of the blank (1) and inwardly of the blank (1) corresponds in shape and position to the translucent area. In a second step, at least the face of the blank (1) is over-molded with a layer of a coloured plastic component (3). Hereby, the opening in the face of the blank is over-spanned by a layer of this coloured plastic component (3) being sufficiently thin to be translucent.

## Description

The invention relates to a method for the production of a plastic part that has an opaque body and at least one translucent area delineated from the former. Such plastic parts are used especially in vehicle technology as panes, caps, operating and display panels and the like. The translucent area is illuminated from the rear by a light source and forms an illuminated symbol on the front surface.

For use in vehicles, the requirement is made that the colour of the plastic part, at least as far as its visible front surface is concerned, precisely matches a specification so that the plastic part will fit in with its surroundings in the desired manner. This requirement can be met in that the body is injection-molded using a plastic compound of the prescribed colour, whereby the translucent area is made with a thin wall and is delineated from the solid, opaque wall parts. However, with this process, no sharp delineation of the translucent area is possible.

As an alternative, the body is injection-molded using a transparent plastic that is then coated black (opaque), after which the coating layer is removed in the translucent area on the front surface by means of laser radiation. Subsequently, a coating in the final colour is still necessary. This process is very demanding. Finally, it is also possible to make the plastic part by means of a two-component injection-molding technique with an opaque basic body and a transparent trans-illumination area. Here, too, a subsequent coating in the final colour is still needed.

The invention provides a method for the production of a plastic part that has an opaque body and a front surface with at least one translucent area delineated from an opaque area, in which a product in the final colour with a sharply delineated translucent area is obtained in just two simple steps.

The method according to the invention is characterized in that, in a first step, a blank is formed by means of injection molding using an opaque plastic component with a recessed volume in the blank corresponding in shape and position to the translucent area. The recessed volume extends from an opening in the face of the blank and inwardly of the blank. In a second step, at least the face of the blank is then over-molded with a layer of a coloured plastic component in a manner to over-span the opening in the face of the blank. The layer is kept sufficiently thin to be translucent. By keeping the layer thin, the colour of this layer can be chosen to fit into the surrounding colours, while light can penetrate and thus produce an illuminated symbol.

According to a first embodiment of the method, both plastic components are injected consecutively in the same mold.

According to a second embodiment of the method, the first step is carried out in a first mold and the second step in a second mold.

According to another preferred embodiment of the method, the recessed volume extends completely through the blank. Thus, the light of a light source situated under the plastic part can propagate freely to the thin layer. With a recessed volume extending perpendicularly to the blank surface, even small symbols with sharply delineated contours can be illuminated this way.

Details and advantages of the invention will now be described with reference to the accompanying drawings in which:
- Figure 1 shows the body or blank of a plastic part produced in a first step according to the inventive method
- Figure 2 shows the plastic part over-molded with plastic in a second step according to the inventive method
- Figure 3 is a cross-sectional view of the plastic part

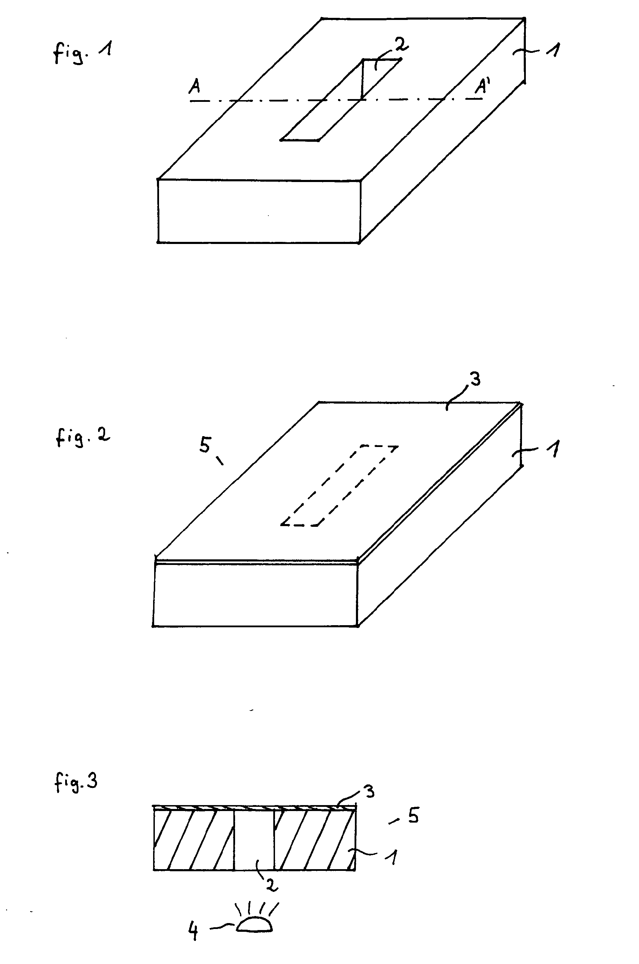

First step of the inventive method is it to form by injection molding a blank 1 as it is represented in figure 1. The blank can take any form needed; it is an opaque plastic component, preferably black, with a recessed volume 2 that forms, in a plan view, a symbol or icon as a translucent area in the front surface that is to be visible on the display panel or cap or the like, when illuminated. The recessed volume 2 extends perpendicularly completely through the blank from an opening in a front face of the blank.

Figure 2 illustrates the second step that is performed according to the inventive method. This second step may be performed in the same mold as the previous one or in another mold. Blank 1 is over-molded on the surface with a thin layer 3 of a second plastic component. The layer is very thin, so that it is translucent. Its colour can be chosen to match exactly with the surrounding colours. It over-spans the opening in the face of the blank. The two plastic components form together a plastic part 5.

The cross-sectional view of plastic part 5 shown in figure 3 along the line A-A' of figure 1 shows that layer 3 bridges the recessed volume 2 in the opaque body 1. When a light source 4, as schematically illustrated in figure 3, illuminates the plastic part 5 from the rear, the light can penetrate only where volume 2 was recessed in the opaque plastic blank 1. Thus, on the front surface of translucent layer 3 the illuminated symbol appears in a sharply defined manner.

## Claims

1. A method for the production of a plastic part (5) that has an opaque body and a front surface with at least one translucent area delineated from an opaque area, comprising the steps of
a) injection molding a blank (1) from an opaque plastic component with a recessed volume (2) in the blank corresponding in shape and position to the translucent area, the recessed volume (2) extending from an opening in a face of said blank and inwardly of said blank; and
b) over-molding at least said face of the blank (1) with a layer of a coloured plastic component in a manner to over-span the opening in the face of the blank (1), the layer being sufficiently thin to be translucent.

2. The method according to Claim 1, wherein both plastic components are injected consecutively in the same mold.

3. The method according to Claim 1, wherein the opaque plastic component is injected in a first mold and the coloured plastic component is injected in a second mold.

4. The method according to any of the preceding claims, wherein the recessed volume (2) extends completely through the blank (1).

5. The method according to any of the preceding claims, wherein the recessed volume (2) extends perpendicularly to said face of the blank (1).
